# FASCICULE DE BREVET EUROPEEN

(11) **EP 1 092 003 B1**
(45) Date de publication et mention de la délivrance du brevet: **21.04.2004**
(21) Numéro de dépôt: 99923707.6
(22) Date de dépôt: 09.06.1999
(51) Int. Cl.: C09K 7/00, C09K 7/02, C10M 173/02

(54) **FLUIDE DE PUITS COMPORTANT UNE COMPOSITION LUBRIFIANTE - PROCEDE POUR CONTROLER LA LUBRIFICATION D'UN FLUIDE DE PUITS - APPLICATION AUX FLUIDES A HAUT PH**
GLEITMITTEL ENTHALTENDE BOHRSPÜLUNG UND VERFAHREN ZUM EINSTELLEN DER GLEITWIRKUNG EINER BOHRSPÜLUNG , VERWENDUNG IN FLÜSSIGKEITEN MIT HOHEN PH WERTEN
BOREHOLE FLUID CONTAINING A LUBRICATING COMPOSITION - METHOD FOR VERIFYING THE LUBRIFICATION OF A BOREHOLE FLUID - APPLICATION WITH RESPECT TO FLUIDS WITH A HIGH PH

(30) Priorité: 12.06.1998 FR 9807969
(43) Date de publication de la demande: 18.04.2001
(73) Titulaire: Institut Français du Pétrole, 92852 Rueil-Malmaison Cedex (FR); OLEON NV, 9940 Ertvelde (BE)
(72) Inventeur: ARGILLIER, Jean-François, F-92210 Saint-Cloud (FR); DEMOULIN, André, B-5998 Beauvechain (BE); AUDIBERT-HAYET, Annie, F-78290 Croissy sur Seine (FR); JANSSEN, Michel, B-1970 Wezembeek-Oppem (BE)
(86) Numéro de dépôt international: PCT/FR1999/001367
(87) Numéro de publication internationale: WO 1999/066006

(56) Documents cités:
- GB-A- 922 667
- US-A- 3 761 410
- US-A- 4 359 393
- DATABASE WPI Section Ch, Week 9017 Derwent Publications Ltd., London, GB; Class D23, AN 90-130964 XP002094473 & SU 1 493 662 A (AS UZB CHEM INST) , 15 juillet 1989

## Description

La présente invention concerne les fluides utilisés pour le forage, le conditionnement de puits ou les interventions dans des puits. Plus particulièrement, l'invention décrit un fluide à base d'eau comportant un composé lubrifiant et un procédé pour contrôler le pouvoir lubrifiant de fluides à base d'eau placés dans des puits forés. Les fluides de puits à base d'eau ont un pH supérieur à 9.

La méthode conventionnelle de forage de puits, pétroliers ou non, consiste à entraîner en rotation un outil à dents fixé à l'extrémité d'une colonne de tiges de forage, la colonne étant généralement entraînée en rotation par une installation de surface. Un fluide, appelé fluide ou boue de forage, est injecté au niveau de l'outil par l'espace intérieur des tiges. Les fonctions principales de ce fluide sont : de nettoyer l'outil et le puits en remontant les débris vers la surface, de stabiliser les parois du puits, d'inhiber les réactions des formations géologiques en contact avec le fluide.

La présente invention ne concerne pas uniquement les fluides dits de forage, mais également les fluides dits de "complétion", ainsi que les fluides dits d'intervention ("workover"). La complétion est une opération qui poursuit l'opération de forage lorsque le puits atteint la formation productrice. La complétion consiste notamment à forer dans la roche réservoir, tester la formation, équiper le puits pour la production, mettre en production. Pour ces opérations, le fluide de complétion peut être spécifique notamment à la roche réservoir et aux effluents produits. Les opérations de "workover" ou d'intervention consistent à travailler dans un puits producteur pour forer, reforer, nettoyer le puits, ou changer des équipements de puits.

Les fluides de puits doivent pouvoir avoir des caractéristiques ajustées en fonction des utilisations très variées, notamment leur viscosité, leur masse volumique ou leur capacité de contrôle du filtrat. Dans certains cas de puits très fortement déviés, par exemple des forages horizontaux, ou plus généralement des puits qui procurent des frottements importants sur les tubulaires descendus dans le puits, la capacité lubrifiante du fluide devient une caractéristique importante.

On connaît le document SU-A-1493 662 qui décrit un composé lubrifiant, mais qui ne convient pas en pH supérieur à 9.

On utilise parfois des fluides à haut pH, c'est à dire supérieur à 9 et généralement supérieur à environ 10, par exemple les boues de forage à base de silicate telles celles décrites dans la publication SPE 37266 présentée à l'« International Symposium on Oilfield Chemistry, 18-21 February 1997, Houston TX ». Ces boues sont récemment utilisées notamment pour leur qualité d'inhibition du gonflement des argiles forées.

Ainsi, la présente invention concerne un fluide de puits à base d'eau qui comporte un composé lubrifiant comprenant au moins un composé amphiphile non-ionique obtenu par réaction d'au moins une huile végétale sur au moins un aminoalcool.

L'huile végétale est choisie dans le groupe formé par l'huile de lin, de carthame, de pépins de raisins, de bois de chine, de tournesol, ou leur mélange.

Dans une variante, l'huile végétale peut être polymérisée et avoir après polymérisation une viscosité à 20°C comprise entre 5 et 60 Pa.s.

L'aminoalcool utilisé peut être la diéthanolamine.

Le composé lubrifiant peut être conditionné sous la forme d'un mélange comprenant un ou plusieurs solvants et éventuellement d'autres composés.

Le solvant du mélange peut être un dérivé d'une huile végétale.

Le mélange (composé lubrifiant et solvants) peut contenir entre 0 et 80% en masse de solvant et de préférence entre 20 et 40%.

Le fluide de puits peut comporter une concentration de 0,1 à 5% en poids du composé lubrifiant et de préférence comprise entre 0,5 à 2% en poids.

Le fluide selon l'invention a un pH supérieur à 9, et de préférence supérieur à 10.

L'invention concerne également un procédé pour contrôler le pouvoir lubrifiant d'un fluide de puits à base d'eau qui consiste à incorporer dans le fluide un composé lubrifiant selon la définition ci-dessus.

L'invention comprend une application du procédé ci-dessus à des fluides de puits à pH supérieur à 9 et de préférence supérieur à 10.

Les huiles végétales qui conviennent sont des huiles fortement insaturées telles que l'huile de lin ou encore de carthame, de pépins de raisins, de bois de chine, de tournesol, ou leur mélange. Ces huiles végétales sont utilisées telles quelles ou polymérisées. Les huiles végétales polymérisées ("stand oils") sont obtenues par traitement thermique des huiles végétales fortement insaturées citées plus haut, dans des conditions telles qu'il n'y a pas d'oxydation. L'huile de lin (de préférence raffinée) est généralement utilisée, mais il est possible d'employer de l'huile de carthame, de pépins de raisins, de bois de chine, de tournesol, ou leur mélange. Pour préparer le composé lubrifiant selon une variante de l'invention, on pourra utiliser une huile végétale polymérisée ayant une viscosité comprise entre 5 et 60 Pa.s à 20°C. A titre d'exemple, le traitement thermique d'une huile de lin raffinée à une température de 290-300°C donne en 6 à 12 heures un produit d'une viscosité de 10 Pa.s à 25°C.

Les aminoalcools utilisés pour préparer les composés de l'invention sont des amines ou polyamines comportant une ou plusieurs fonctions alcool et éventuellement une ou plusieurs fonctions éthers.

Par exemple, les aminoalcools peuvent correspondre aux formules suivantes :

HO-CmH2m-NH2

HO-CmH2m-NH-CkH(2k+1)

(HO-CmH2m)2-NH

(HO-CmH2m)3-N

(HO-CmH2m)p-CH(3-p)-NH2

HO-(CmH2m-O)ₙ-NH-CkH(2k+1)

HO-(CmH2m-O)ₙ-CkH2k-NH2

HO-(CmH2m-O)ₙ-NH-CkH2k-(O-CmH2m)ₙ-OH ramifiés ou non

avec m=2 à 6; k= 1 à 6; p=2 ou 3; n=2 à 20

En particulier, on peut citer:
la monoéthanolamine : OH - (CH2)2 - NH2,
la monopropanolamine : OH - (CH2)3 -NH2,
la monoisopropanolamine : CH3 -CH (OH) - CH2 - NH2,
le 2-amino-1-butanol : CH3 -CH2 - CH (NH2) -CH2 - OH,
le 1-amino-2-butanol : CH3 - CH2 - CH(OH) - CH2 - NH2,
la N-méthyl-éthanolamine : CH3 - NH - (CH2)2 - OH,
la N-butyl-éthanolamine : CH3 - (CH2)3 - NH - (CH2)2 - OH,
la pentanolamine, l'hexanolamine, la cyclohexanolamine, les polyalcanolamines ou encore les polyalcoxyglycolamines, de formule :

   OH - (CH2 - CH2 - O)n - CH2 - CH2 - NH2 (n entre 1 et 30)
et les polyols aminés tels que :
la diéthanolamine : (OH - CH2 - CH2)2 - NH,
la diisopropanolamine : (CH3 - CH (OH) - CH2)2 - NH, ou
le trihydroxyméthylaminométhane : ((HO)H2C -)3C - NH2.

La synthèse des composés de l'invention peut être obtenue en faisant réagir un excès d'aminoalcool, de préférence la diéthanolamine sur une huile végétale telle que revendiquée.

De préférence, la réaction est conduite en l'absence de solvant, et généralement à une température supérieure à environ 100°C, et de préférence comprise entre 100 et 200°C.

Cependant, si la viscosité du milieu réactionnel est trop élevée, la réaction pourra se faire en présence d'un solvant.

On obtient en fin de réaction le composé lubrifiant inclus dans le fluide selon l'invention.

Ce composé peut être incorporé tel quel dans le fluide de puits aqueux à haut pH ou non, ou sous la forme d'un mélange comprenant un solvant ou plusieurs solvants et éventuellement d'autres composés.

Pour obtenir un mélange de viscosité acceptable compte tenu des applications envisagées, un solvant peut être additionné. Un certain nombre de solvants sont susceptibles d'être utilisés, en particulier des coupes aromatiques; toutefois on donnera la préférence à tous les solvants dérivés d'huiles naturelles, tels que des esters d'acides gras en C6 à C18 et d'alcools linéaires ou branchés en C2 à C18, afin d'obtenir une solution d'additifs biodégradable et non polluante pour l'environnement.

Dans leur utilisation comme additif lubrifiant à un fluide de puits ces composés sont ajoutés dans le fluide de puits à des concentrations allant en général de 0,1 à 5% en masse, de préférence de 0, 5 à 2% en masse.

Il faut noter que les réglementations relatives à la protection de l'environnement imposent de plus en plus que les différents additifs utilisés dans la formulation des fluides de puits soient non toxiques et non polluants vis-à-vis de l'environnement.

Le fluide de puits de la présente invention qui comporte la composition lubrifiante a notamment l'avantage de répondre aux critères actuels relatifs à la protection de l'environnement.

De plus, la présente composition peut être utilisée avec tous les fluides de puits à base d'eau à haut pH, par exemple, les fluides à base de silicate alourdis ou non, certains fluides hautes pressions/hautes températures (HP/HT).

Les pH élevés sont des conditions difficiles pour la stabilité des produits lubrifiants, en particulier ceux à base d'esters classiques qui s'hydrolysent à pH élevé et sous l'effet de la température.

L'invention sera mieux comprise et ses avantages apparaîtront plus nettement à lecture des exemples suivants, nullement limitatifs.

Le pouvoir lubrifiant d'une composition lubrifiante ajoutée à un fluide de puits selon l'invention est testé à l'aide d'un "Lubricity tester-Model 212" fabriqué par la société NL Baroid Petroleum Services (Instruction Manual Part No.211210001EA). Les tests ("Lubricity-surface to surface) sont effectués selon les procédures recommandées par la norme RP 13B de l'American Petroleum Institute (API), (100 psi (689 kPa) à 60 tours/minute). Pour comparer les capacités lubrifiantes des différentes compositions, on a relevé les lectures des graduations obtenues avec l'appareil de test ci-dessus décrit. Ces lectures correspondent à des valeurs relatives du couple de frottement. Plus ces valeurs lues sont faibles, meilleur est le pouvoir lubrifiant de la composition testée.

Le principe des exemples ci-après est de mélanger, à un fluide de base, une certaine quantité d'une composition lubrifiante déterminée, le mélange étant ensuite testé dans l'appareillage. Les essais, sauf avis contraire, ont été réalisés à température ambiante (environ 25°C).

Une première composition lubrifiante, donnée en exemple, et ajoutée au fluide de puits de base a été dénommé ici NTL.

Le NTL est le résultat de la réaction de 52 kg d'huile de lin polymérisée d'une viscosité de 10 Pa.s et 28 kg de diéthanolamine, dans un réacteur de 100 litres et chauffé pendant une heure à 160°C. Sa viscosité est de l'ordre de 2700 mPa.s à 40°C.

Une seconde composition lubrifiante, dénommée XTL est le produit de la réaction de 52 kg d'huile de lin et de 28 kg de diéthanolamine dans le même réacteur que précédemment et sous les mêmes conditions.

### Exemple 1 : Boue silicate avant vieillissement

Composition du fluide de base:
■ eau douce,
■ viscosifiant (xanthane) 5,2 g/l,
■ réducteur de filtrat (Aquapac-Regular) 0,14 g/l
■ réducteur de filtrat (Aquapac-LV) 2,51 g/l
■ argile de charge 20 g/l
■ silicate de sodium 84, 7 g/l
■ chlorure de sodium 50 g/l
■ baryte 93 g/l
■ NaOH pour obtenir : pH=1l
Le xanthane utilisé pour tous les tests est de l'IDVIS commercialisé par la société Dowell Drilling Fluids. Les produits du type CMC AQUAPAC Regular et LV sont commercialisés par la société Aqualon. Cet essai démontre le pouvoir de lubrification du lubrifiant NTL ajouté à un fluide de base à haut pH, en fonction de la concentration en poids.

| **Lubrifiant NTL** | **Lecture du couple** | |
|---|---|---|
| (%) | (lbs.in) | N.m |
| 0 | 42 | 4,75 |
| 0,5 | 25 | 2,8 |
| 1 | 23 | 2,6 |
| 1,5 | 21 | 2,4 |
| 2 | 17 | 1,9 |
| 3 | 17 | 1,9 |
| 4 | 17 | 1,9 |
| 5 | 17 | 1,9 |

On observe une diminution de la valeur du couple avec l'augmentation de la concentration en lubrifiant. Les résultats montrent les bonnes performances du système NTL sur cette formulation à pH élevé. Une concentration en additif lubrifiant de l'ordre de 2% est ici optimale.

### Exemple 2: Boue silicate après vieillissement

On utilise la formulation du fluide de base précédent, additionnée de 2% de NTL à laquelle on fait subir un vieillissement dans une cellule de test dite « Hot Rolling » à 80°C pendant 16 heures, puis retour à la température ambiante. Les résultats suivants montrent que le vieillissement en température ne dégrade pas les propriétés de lubrification de l'additif NTL dans une boue à haut pH.

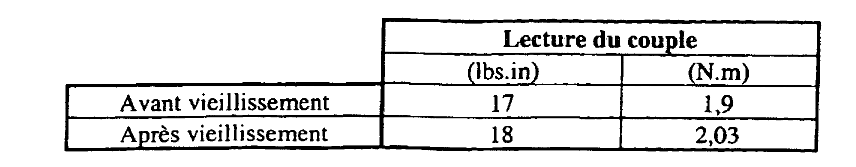

### Exemple 3: Influence du lubrifiant sur les propriétés rhéologiques et de filtration de la boue

Dans ce qui suit, sont indiquées les propriétés rhéologiques de la boue (exprimées en VA viscosité apparente en centipoise (cP), VP viscosité plastique en centipoise (cP), YV est la valeur seuil de cisaillement (Yield Value) en lb/100ft² et gel 0 et gel 10 (ces mesures sont conformes au standard API RP 13B1 qui donne les correspondances des unités SI dans l'Appendice I), avec et sans NTL, avant (AV) et après vieillissement (AP) de 16h à 80°C, ainsi que les propriétés de filtration exprimées par la quantité de filtrat (en cm3) corrigé obtenu après 30 minutes de filtration.

La formulation du fluide de base est la même que celle de la boue silicate de l'exemple 1.

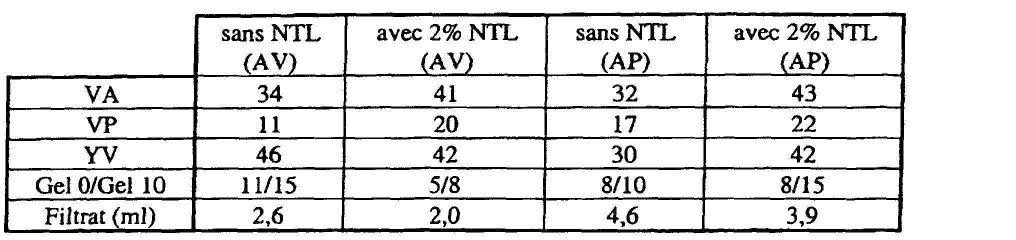

Ces résultats mettent en évidence que l'addition du pourcentage optimisé de NTL ne modifie pas significativement les propriétés rhéologiques et de filtration de la boue, que ce soit avant ou après vieillissement.

### Exemple 4: Dilution de NTL par un solvant

Différents composés lubrifiants ont été testés (L1, L2, L3, L4, L5, L6), tous représentatifs de la présente invention. Les pourcentages sont exprimés en poids. Les viscosités mesurées à 40°C sont indiquées dans le tableau ci-dessous.

| Mélanges | Viscosité (mPa.s) |
|---|---|
| L1: NTL-100% | 2670 |
| L2: NTL-80% + Oléate de méthyle-20% | 790 |
| L3: NTL-70% + Oléate de méthyle-30% | 410 |
| L4: NTL-80% + 2-butyle C12-C14-20% | 710 |
| L5: NTL-70% + 2-butyle C12-C14-30% | 385 |
| L6: NTL-70% + 2-butyle C12-C14-30% + 2-octanol (5% par rapport au 2-butyle C12-C14) | 350 |

Les performances de lubrification et les caractéristiques des différents mélanges sont indiquées ci-dessous. Les mélanges ont été ajoutés à 1 ou 2% en poids dans la formulation de boue silicate de l'exemple 1.

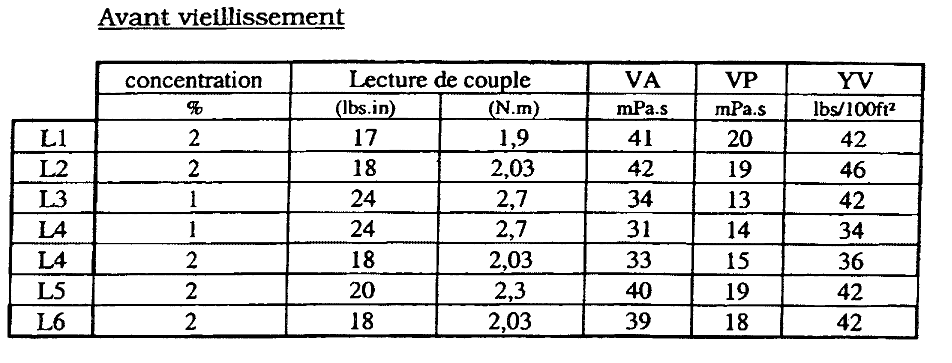

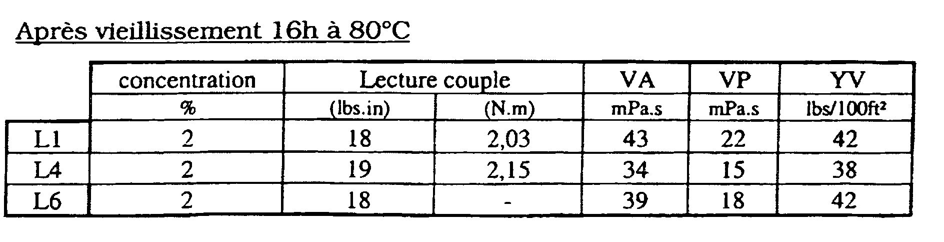

Ces résultats montrent les très bonnes performantes des systèmes étudiés en terme de lubrification. L'intérêt principal d'utiliser un diluant est de diminuer la viscosité de l'additif NTL ce qui facilite son incorporation dans le fluide aqueux.

### Exemple 5: Boue silicate et composé XTL:

On utilise la formulation de boue silicate de l'exemple 1, avant vieillissement et après un vieillissement tel que décrit dans l'exemple 2.

| Avant vieillissement: | | |
|---|---|---|
| **Lubrifiant XTL** | **Lecture du couple** | |
| **(%)** | (lbs.in) | N.m |
| 0 | 42 | 4,75 |
| 0,5 | 26 | 2,9 |
| 1 | 24 | 2,7 |
| 1,5 | 22 | 2,5 |
| 2 | 22 | 2,5 |
| 3 | 22 | 2,5 |

| Après vieillissement: | | |
|---|---|---|
| **Lubrifiant XTL** | **Lecture du couple** | |
| **(%)** | (lbs.in) | N.m |
| 2 | 22 | 2,5 |

Ces résultats montrent que le composé lubrifiant XTL permet de diminuer les frottements de façon notable. Ses caractéristiques ne sont pas altérées après vieillissement.

### Exemple 6: Boue bentonitique à l'eau de mer

composition du fluide de base :
- eau de mer,
- Bentonite 30 g/l
- viscosifiant (xanthane) 2 g/l
- réducteur de filtrat (Aquapac-LV) 1 g/l
- dispersant 3 g/l
- Baryte, telle que la masse volumique SG = 1,2 kg/l

Le dispersant utilisé est du polyacrylate FP30S commercialisé par la société COATEX (France) .

Le pH de la formulation est ajusté à la soude NaOH, tel que pH=9 ou pH=12.

Dans cet essai, sont indiqués les résultats du pouvoir de lubrification du fluide à haut pH, en fonction de la concentration en lubrifiant NTL ajouté.

| **Lubrifiant NTL** | **Lecture du couple** | | | |
|---|---|---|---|---|
| | pH 9 | | pH 12 | |
| **(%)** | (lbs.in) | N.m | (lbs.in) | N.m |
| 0 | 36 | 4,07 | 36 | 4,07 |
| 0,5 | 34 | 3,84 | 32 | 3,62 |
| 1 | 31 | 3,5 | 21 | 2,37 |
| 2 | 31 | 3,5 | 18 | 2,04 |
| 3 | 25 | 2,8 | 18 | 2,04 |
| 4 | 21 | 2,37 | 18 | 2,04 |
| 5 | 19 | 2,15 | 16 | 1,81 |

Ces résultats montrent les très bonnes performances de lubrification de NTL, notamment à pH élevé.

### Exemple 7: Boue au formiate de césium

composition du fluide de base:
- eau de mer
- viscosifiant (xanthane) 2 g/l
- réducteur de filtrat 2 g/l
- argile de charge 10 g/l
- KCl 50 g/l
- CsCOOH, H2O (formiate de cesium hydraté): 300 g/l tel que la masse volumique SG = 1,2 kg/l

Le pH de la formulation est ajusté à la soude NaOH, tel que le pH = 9 ou pH=12

Dans cet essai sont indiqués les résultats de lubrification en fonction de la concentration en lubrifiant NTL ajouté.

| **Lubrifiant NTL** | **Lecture du couple** | | | |
|---|---|---|---|---|
| | pH 9 | | pH 12 | |
| (%) | (lbs.in) | N.m | (lbs.in) | N.m |
| 0 | 36 | 4,07 | 40 | 4,52 |
| 0,5 | 16 | 1,81 | 18 | 2,04 |
| 1 | 4 | 0,45 | 6 | 0,68 |
| 2 | 2 | 0,23 | 2 | 0,23 |
| 3 | 2 | 0,23 | 2 | 0,23 |

Ces mesures montrent les très bonnes performances de lubrification de NTL dans ce type de fluide à très haut pH.

## Revendications

1. Fluide de puits à base d'eau, **caractérisé en ce qu'**il comporte un composé lubrifiant comprenant au moins un composé amphiphile non-ionique obtenu par réaction d'au moins une huile végétale sur au moins un aminoalcool, **en ce que** ladite huile végétale est choisie dans le groupe formé par l'huile de lin, de carthame, de pépins de raisins, de bois de chine, de tournesol ou leur mélange, et **en ce que** son pH est supérieur à 9.

2. Fluide selon la revendication 1, **caractérisé en ce que** ladite huile végétale est polymérisée et a une viscosité à 20°C comprise entre 5 et 60 Pa.s.

3. Fluide selon l'une des revendications 1 à 2, **caractérisé en ce que** ledit aminoalcool est la diéthanolamine.

4. Fluide selon l'une des revendication 1 à 3, **caractérisé en ce que** le composé lubrifiant est conditionné sous la forme d'un mélange comprenant au moins un solvant.

5. Fluide selon la revendication 4, **caractérisé en ce que** ledit solvant est un dérivé d'une huile végétale.

6. Fluide selon l'une des revendications 4 et 5, **caractérisé en ce que** ledit mélange contient entre 0 et 80% en masse de solvant et de préférence entre 20 et 40%.

7. Fluide selon l'une des revendications précédentes, **caractérisé en ce qu'**il comporte une concentration de 0,1 à 5% en poids dudit composé lubrifiant.

8. Fluide selon la revendication 7, **caractérisé en ce que** ladite concentration est comprise entre 0,5 à 2% en poids.

9. Fluide selon l'une des revendications précédentes, **caractérisé en ce que** son pH est supérieur à 10.

10. Procédé pour contrôler le pouvoir lubrifiant d'un fluide de puits à base d'eau selon l'une des revendications 1 à 9, dans lequel on ajuste la concentration dudit composé lubrifiant pour contrôler ledit pouvoir.

## Claims

1. A water-base well fluid, **characterized in that** it comprises a lubricating compound containing at least one non-ionic amphiphilic compound obtained by reaction of at least one vegetable oil on at least one aminoalcohol, **in that** said vegetable oil is selected from the group consisting of linseed, safflower, grapeseed, wood, sunflower oil, or mixtures thereof, and **in that** the pH value thereof is above 9.

2. A fluid as claimed in claim 1, **characterized in that** said vegetable oil is polymerized and has a viscosity at 20°C ranging between 5 and 60 Pa.s.

3. A fluid as claimed in any one of claims 1 to 2, **characterized in that** said aminoalcohol is diethanolamine.

4. A fluid as claimed in any one of claims 1 to 3, **characterized in that** the lubricating compound is conditioned in form of a mixture comprising at least one solvent.

5. A fluid as claimed in claim 4, **characterized in that** said solvent is a vegetable oil derivative.

6. A fluid as claimed in any one of claims 4 and 5, **characterized in that** said mixture contains between 0 and 80 % by mass of solvent and preferably between 20 and 40%.

7. A fluid as claimed in any one of the previous claims, **characterized in that** it comprises a concentration of 0.1 to 5 % by weight of said lubricating compound.

8. A fluid as claimed in claim 7, **characterized in that** said concentration ranges between 0.5 and 2 % by weight.

9. A fluid as claimed in any one of the previous claims, **characterized in that** the pH value thereof is above 10.

10. A method for controlling the lubricating power of a water-base well fluid as claimed in any one of claims 1 to 9, wherein the concentration of said lubricating compound is adjusted so as to control said power.

## Patentansprüche

1. Aus Wasser bestehendes Bohrlochfluid, **dadurch gekennzeichnet, daß** es eine Schmierverbindung enthält, die wenigstens eine durch Reaktion wenigstens eines Pflanzenöls mit wenigstens einem Aminoalkohol erhaltene nichtionische amphiphile Verbindung enthält, daß das besagte Pflanzenöl aus der aus Lein-, Saflor-, Traubenkern-, Holz-, Sonnenblumenöl oder dessen Mischung bestehende Gruppe ausgewählt ist, und daß sein pH-Wert größer als 9 ist.

2. Fluid gemäß Anspruch 1, **dadurch gekennzeichnet, daß** das besagte Pflanzenöl polymerisiert ist und eine Viskosität bei 20°C zwischen 5 und 60 Pa.s besitzt.

3. Fluid gemäß irgendeinem der Ansprüche 1 bis 2, **dadurch gekennzeichnet, daß** der besagte Aminoalkohol Diethanolamin ist.

4. Fluid gemäß irgendeinem der Ansprüche 1 bis 3, **dadurch gekennzeichnet, daß** die Schmierverbindung in Form von einer wenigstens ein Lösungsmittel enthaltenden Mischung konditioniert ist.

5. Fluid gemäß Anspruch 4, **dadurch gekennzeichnet, daß** das besagte Lösungsmittel ein Pflanzenölderivat ist.

6. Fluid gemäß irgendeinem der Ansprüche 4 und 5, **dadurch gekennzeichnet, daß** die besagte Mischung einen zwischen 0 und 80 % Lösungsmittel, vorzugsweise zwischen 20 und 40 %, liegenden Massenanteil enthält.

7. Fluid gemäß irgendeinem der vorstehenden Ansprüche, **dadurch gekennzeichnet, daß** es eine Konzentration von 0,1 bis 5 Gew.% an der besagten Schmierverbindung besitzt.

8. Fluid gemäß Anspruch 7, **dadurch gekennzeichnet, daß** die besagte Konzentration zwischen 0,5 und 2 Gew.% liegt.

9. Fluid gemäß irgendeinem der vorstehenden Ansprüche, **dadurch gekennzeichnet, daß** sein pH-Wert größer als 10 ist.

10. Verfahren zur Regelung der Schmierfähigkeit eines aus Wasser bestehendes Bohrlochfluids gemäß irgendeinem der Ansprüche 1 bis 9, in welchem die Konzentration der besagten Schmierverbindung zur Regelung der besagten Fähigkeit eingestellt wird.
